# EUROPÄISCHE PATENTSCHRIFT

(11) **EP 4 483 078 B1**
(45) Veröffentlichungstag und Bekanntmachung des Hinweises auf die Patenterteilung: **17.12.2025**
(21) Anmeldenummer: 23708686.3
(22) Anmeldetag: 21.02.2023
(51) Int. Cl.: F16H 63/30, F16H 63/34

(54) **ANTRIEBSSTRANG UMFASSEND EINE BETÄTIGUNGSANORDNUNG UND EINE KOPPLUNGSEINRICHTUNG ZUR KOPPLUNG EINER ABTRIEBSWELLE MIT EINEM ANTRIEB UND ZUR BETÄTIGUNG EINER PARKSPERRE**
DRIVE TRAIN COMPRISING AN ACTUATING ASSEMBLY AND A COUPLING DEVICE FOR COUPLING AN OUTPUT SHAFT TO A DRIVE AND FOR ACTUATING A PARKING LOCK
CHAÎNE CINÉMATIQUE COMPRENANT UN ENSEMBLE D'ACTIONNEMENT ET DISPOSITIF D'ACCOUPLEMENT POUR ACCOUPLER UN ARBRE DE SORTIE À UN ENTRAÎNEMENT ET POUR ACTIONNER UN VERROU DE STATIONNEMENT

(30) Priorität: 24.02.2022 DE 102022104391
(43) Veröffentlichungstag der Anmeldung: 01.01.2025
(73) Patentinhaber: Schaeffler Technologies AG & Co. KG, 91074 Herzogenaurach (DE)
(72) Erfinder: GREB, Peter, 77833 Ottersweier (DE)
(74) Vertreter: Schaeffler Technologies
(86) Internationale Anmeldenummer: PCT/DE2023/100140
(87) Internationale Veröffentlichungsnummer: WO 2023/160754

(56) Entgegenhaltungen:
- WO-A1-2018/095544
- DE-A1- 10 224 357
- DE-A1- 102018 211 113
- US-B1- 10 968 986

## Beschreibung

Die vorliegende Erfindung betrifft den Antriebsstrang eines Kraftfahrzeuges, umfassend eine Betätigungseinrichtung zur Betätigung einer Kopplungseinrichtung zur Kopplung wenigstens eines Antriebsrades mit einer Parksperreneinheit. Weiterhin betrifft die Erfindung noch ein Verfahren zum sequentiellen Betätigen einer ersten Klauenkupplung und einer zweiten Klauenkupplung zum drehfesten Koppeln eines Antriebsrads wahlweise mit einer Parksperreneinheit oder einem Antriebsmotor.

Aus der DE 10 2018 130 628 A1 ist ein Antriebsstrang mit einer Betätigungseinrichtung bekannt, bei der die Betätigungseinrichtung so eingerichtet ist, dass sie sowohl eine Parksperre, als auch eine Reibkupplung betätigen kann. Hierfür ist ein Überweg der Betätigungseinrichtung für die Reibkupplung vorgesehen, in welchem die zugeordnete Parksperre betätigbar ist. Für die Betätigung der Reibkupplung und der Parksperre selber sind dabei unterschiedliche Betätigungselemente wie Parksperrenklaue und Betätigungshebel vorgesehen, auf welche die Betätigungseinrichtung in unterschiedliche Betätigungsrichtungen getrennt voneinander einwirkt.

Ähnliche relevante Antriebsstränge sind aus der WO 2018/095544 A1, DE 10 2018 211 113 A1 und DE 102 24 357 A1 bekannt.

Hierbei zeigt der aus dem Dokument WO 2018/095544 A1 bekannte Antriebsstrang zwar einen Antriebsmotor und eine Schaltmuffe jedoch zeigt er nicht, dass der Antriebsmotor eine Drehmomentschnittstelle aufweist, die in der Neutralstellung der Schaltmuffe mit der Drehmomentschnittstelle der Schaltmuffe gekoppelt ist

Die Aufgabe der vorliegenden Erfindung besteht darin einen Antriebsstrang der beschriebenen Ausführung so auszugestalten, dass eine möglich einfache Drehmomentübertragung innerhalb des Antriebsstrangs von einem Antrieb zu einem Antriebsrad oder eine Blockierung der Antriebsräder erfolgen kann. Weiterhin soll auch ein Verfahren für eine entsprechende Herstellung der Drehmomentübertragung bzw. Blockade gefunden werden.

Diese Aufgabe der Erfindung wird durch einen gattungsgemäßen Antriebsstrang gemäß den Merkmalen von Anspruch 1 gelöst. Weiter wird die Erfindung gemäß eines Verfahrens nach Anspruch 9 gelöst.

Erfindungsgemäß ist vorgesehen, dass die Kopplungsvorrichtung eine Schaltmuffe umfasst, die mittels der Betätigungseinrichtung axial verlagert werden kann.

Der Antriebsmotor weist für die Drehmomentweitergabe vom Antriebsmotor zum Antriebsrad eine Drehmomentschnittstelle auf, die in einer Neutralstellung PS_{N} der Schaltmuffe ausschließlich mit einer Drehmomentschnittstelle der Schaltmuffe gekoppelt ist.

Das Antriebsrad weist ferner ein Verbindungselement mit einer Drehmomentschnittstelle auf. Diese Drehmomentschnittstelle wird in einer ersten axialen Position PS₁ der Schaltmuffe mit der Drehmomentschnittstelle der Schaltmuffe gekoppelt, die in dieser Position auch gleichzeitig noch mit der Drehmomentschnittstelle des Antriebsmotors gekoppelt ist.

Hierfür weist die Drehmomentschnittstelle der Schaltmuffe eine axiale Ausdehnung auf, die ausreicht, so dass in der ersten axialen Position PS₁ die Drehmomentschnittstelle der Schaltmuffe zur Drehmomentübertragung vom Antriebsmotor zum Antriebsrad sowohl mit der Drehmomentschnittstelle des Antriebsmotors, als auch mit der Drehmomentschnittstelle des Antriebsrads gekoppelt ist. Der Antriebsstrang befindet sich dann in einem "Fahrzustand", in welchem das, oder die Antriebsräder vom Antriebsmotor über die Schaltmuffe angetrieben werden können.

Ferner weist auch die Parksperreneinheit eine Drehmomentschnittstelle auf, mit welcher die Drehmomentschnittstelle der Schaltmuffe in einer zweiten axialen Position PS₂ der Schaltmuffe gekoppelt ist.

Die axiale Ausdehnung der Drehmomentschnittstelle der Schaltmuffe ist zusätzlich so ausgebildet, dass zusätzlich zu der obigen Bedingung auch die Bedingung erfüllt ist, dass in dieser zweiten axialen Position PS₂ die Drehmomentschnittstelle der Schaltmuffe sowohl mit der Drehmomentschnittstelle der Parksperreneinheit, als auch mit der Drehmomentschnittstelle des Antriebsrads gekoppelt ist. Die Antriebsräder sind dann blockiert und der Antriebsstrang befindet sich in einem "Parkzustand".

Als dritte Bedingung ist die axiale Ausdehnung der Drehmomentschnittstelle der Schaltmuffe weiter so ausgebildet, dass zu keinem Zeitpunkt sowohl eine Kopplung der Drehmomentschnittstelle der Schaltmuffe sowohl mit der Drehmomentschnittstelle der Parksperreneinheit, als auch mit der Drehmomentschnittstelle des Antriebsmotors erfolgt. Hierdurch soll eine Blockade des Antriebs als solches vermieden werden.

Insgesamt kann durch diese Ausgestaltung erreicht werden, dass mit nur einer Schaltmuffe durch axiales Verlagern nacheinander zunächst ein Fahrzustand durch herstellen einer Kopplung zwischen Antriebsmotor und Antriebsräder über die Schaltmuffe und anschließend hiervor getrennt ein Parkzustand durch eine Kopplung der Antriebsräder mit der Parksperreneinheit möglich ist, oder umgekehrt. Hierfür sind vorzugsweise die Drehmomentschnittstellen von Antriebsmotor, Antriebsrad und Parksperreneinheit alle auf einer gemeinsamen Achse fluchtend angeordnet. Die Schaltmuffe kann dann mit ihrer Drehmomentschnittstelle nacheinander die beschriebenen Kopplungen realisieren.

In einer Weiterbildung ist vorgesehen, dass die Betätigungseinheit einen Aktorantrieb, ein Schaltelement und ein mit dem Aktorantrieb gekoppeltes Betätigungselement umfasst. Das Schaltelement ist dabei zum axialen Verlagern der Schaltmuffe einerseits mit der Schaltmuffe und andererseits mit dem Betätigungselement gekoppelt. D.h. eine Bewegung des Betätigungselements durch den Aktorantrieb kann über die Kopplung zunächst in eine Bewegung des Schaltelements und dann wieder in eine Bewegung, hier eine axiale Verlagerung der Schaltmuffe umgesetzt werden.

Vorteilhaft ist es auch, wenn die Kopplung zwischen dem Schaltelement und der Schaltmuffe und/oder zwischen dem Schaltelement und dem Betätigungselement über ein Federelement erfolgt. Dieses Federelement ist bevorzugt zwischen dem Schaltelement und der Schaltmuffe angeordnet. Hierdurch kann bewirkt werden, dass bei einem Schaltvorgang der Schaltmuffe in einen der Zustände "Fahrzustand" und "Parkzustand" eine zeitweise Fehlstellung zwischen den beteiligten Drehmomentschnittstellen ausgeglichen werden kann. Dieses kann z.B. durch eine Zahn- auf Zahnstellung von Verzahnungen der Fall sein. Bis sich eine der Drehmomentschnittstellen dann entsprechend, z.B. in Umfangsrichtung bewegt, kann der von dem Betätigungselement vorgegebene Weg nicht vollständig in eine entsprechende axiale Position PS₁ oder PS₂ umgesetzt werden. Die hierfür aufgewandte Energie kann dann im Federelement gespeichert und bei Aufhebung der Blockade in eine selbsttätige axiale Verschiebung der Schaltmuffe zur abschließenden Kopplung der Drehmomentschnittstellen miteinander führen.

Um einen entsprechenden Zustand des Fahrzeugs, wie z.B. "Fahrzustand" oder "Parkzustand" erkennen zu können, kann vorgesehen sein, dass die Betätigungseinheit einen ersten Wegsensor zum Erfassen des Linearwegs des Schaltelements und/oder Betätigungselements in axialer Richtung umfasst. Bei dem Erreichen von ersten oder zweiten Positionen P₁ oder P₂ des Schaltelements kann dann beispielsweise auf entsprechende Positionen PS₁ oder PS₂ der Schaltmuffe und auf die damit verbunden Zustände des Antriebsstrangs geschlossen werden.

Bei dem Schließen der Axialposition der Schaltmuffe aus den Positionen des Schaltelements kann es zu Problemen kommen, wenn eine vorrübergehende Blockade zwischen den Drehmomentschnittstellen des Antriebrads, bzw. der Parksperreneinheit und der Schaltmuffe kommt. Das Schaltelement nimmt dann zwar schon die axiale Position ein, die mit einem Zustand der Antriebstrangs verbunden ist, allerdings kann die Schaltmuffe dieser Bewegung noch nicht folgen und das Federelement wird entsprechend vorgespannt. Wird dann bereits durch den ersten Wegsensor z.B. ein Fahrzustand erkannt, obwohl noch keine drehmomentübertragende Kopplung zwischen Antriebsrad und Antriebsmotor vorliegt, so kann der Antriebsmotor bereits auf entsprechende Drehzahlen gebracht werden. Ein anschließendes Koppeln mit der Drehmomentschnittstelle, die ggf. eine Verzahnung aufweist wird dann zumindest erschwert. Auch können dabei Schäden auftreten.

In einer Weiterentwicklung kann daher in einer ersten Alternative vorgesehen sein, dass ein zweiter Wegsensor zum Erfassen des Linearwegs der Schaltmuffe selber, zusätzlich zum ersten Wegsensor zum Erfassen des Linearwegs des Schaltelements und/oder des Betätigungselements vorgesehen ist. Auf diese Weise kann genau bestimmt werden, ob unabhängig von der Wegstellung des ersten Wegsensors tatsächlich ein entsprechender Zustands des Antriebsstrangs vorliegt. Insbesondere kann vorgesehen sein, dass der zweite Wegsensor ausschließlich zur Bestimmung des Zustandes "Fahrzustand" vorgesehen ist und für die Erkennung des Zustandes "Parkzustand" alleine der erste Sensor verwendet wird. Beim Einlegen der Parksperre ist auch ein erkennen des blockierten Zustands als Parkzustand ausreichend, da der Antriebsstrang nicht mehr angetrieben wird und durch eine mögliche Blockade nur noch eine relative Verdrehung zwischen den Drehmomentschnittstellen von Antriebsrad und Schaltmuffe einerseits und der Drehmomentschnittstelle der Parksperreneinheit andererseits auftreten kann, die dann automatisch zur Überwindung der Blockade und einem anschließenden Koppeln der Parksperreneinheit mit dem Antriebsrad führt.

In einer zweiten alternativen Weiterentwicklung ist vorgesehen, dass ausschließlich der erste Wegsensor zum Festlegen eines axialen Zustandes der Kopplungseinrichtung und damit der Schaltmuffe vorgesehen ist. Es kann weiterhin vorgesehen sein, dass alleine der erste Wegsensor zum Bestimmen vorgesehen ist, ob die Drehmomentschnittstellen der Parksperreneinheit, bzw. des Antriebmotors miteinander oder mit dem Antriebsmotor gekoppelt sind, bzw. als gekoppelt anzusehen sind. Auf das Bereitstellen eines zweiten Wegsensors wird dann verzichtet.

In einer darauf aufbauenden Weiterentwicklung ist vorgesehen, dass die gesamte Kopplungseinrichtung sensorlos aufgebaut ist. D.h. ein Sensor zur Bestimmung einer Position oder eines unmittelbaren Bestimmen eines Zustandes der Schaltmuffe ist gerade nicht vorgesehen.

Um auch bei einer Bestimmung der Zustände mit nur dem ersten Wegsensor, bzw. mit einer sensorlosen Kopplungseinheit, wenigstens den Zustand "Fahrzustand" sicher zu erkennen kann vorgesehen sein, dass der axiale Abstand zwischen der Drehmomentschnittstelle des Antriebsrades und der Parksperreneinheit gegenüber dem axialen Abstand zwischen der Drehmomentschnittstelle des wenigstens einen Antriebsrades und des Antriebsmotors vergrößert ist.

Für die Erkennung des Fahrzustandes kann dann vorgesehen sein, dass ein maximales Spannen des Federelements um den maximalen Federweg sF nicht ausreicht, um den Fahrzustand als erkannt zu bestimmen. Das Federelement wird um den maximalen Federweg sF bei einer vorläufigen ersten axialen Position des Schaltelements P'₁ zusammengepresst, wenn hier gerade ein geblockter Zustand vorliegt.

Wird der geblockte Zustand aufgehoben, was z.B. über ein Rollen der Antriebsräder erfolgen kann, so entspannt sich das Federelement um den Federweg sF. Ein Erkennen des Fahrzustandes erfolgt dann aber in dieser Ausführungsform noch nicht. Hierzu ist noch ein weiteres Verfahren des Schaltelements und/oder Betätigungselements aus der vorläufigen ersten Position P'₁ in die erste Position P₁ die durch wegfallende Blockade möglich wird. Hierfür kann es notwendig sein, dass eine Betätigung des Schaltelements oberhalb einer bestimmten Kraftschwelle nicht möglich ist, oder dass das Federelement oder ein zweites Federelement zwischen Betätigungselement und Schaltelement vorgesehen ist, so dass das Schaltelement erst beim Aufheben der Blockade in die erste Position P₁ verfahren wird. Der Abstand zwischen der vorläufigen Position P'₁ und der ersten Position P₁ kann als Ds bezeichnet werden und beträgt vorzugsweise gerade die Länge des maximalen Federwegs sF.

Beim Koppeln der Parksperreneinheit mit dem Antriebsrad, reicht zur Feststellung des Parkzustandes bereits aus, dass das Stellelement in die zweite axiale Position P₂ verfahren ist, wie oben beschrieben wurde. Auch im Falle einer Blockade kann hier der Parkzustand als eingelegt gewertet werden. Eine zusätzlicher Verfahrweg um die Strecke Ds ist hier gerade nicht notwendig. Damit es nicht zu einem Fehler bei der Erkennung des Parkzustandes kommen kann, ist es vorgesehen, dass der Abstand zwischen den Drehmomentschnittstellen des Antriebsrades und der Parksperreneinheit gerade um diesen zusätzlichen Verfahrweg vergrößert wird. In der Weiterentwicklung der Erfindung ist es daher vorgesehen, dass der axiale Abstand sP zwischen den Drehmomentschnittstellen der Parksperreneinheit und des wenigstens einen Antriebsrads größer, vorzugsweise um den maximalen Federweg sF größer als der axiale Abstand sA zwischen den Drehmomentschnittstellen des Antriebsrads und des Antriebsmotors ist.

Es hat sich weiter herausgestellt, dass es besonders vorteilhaft ist, wenn die Schaltmuffe eine Innenverzahnung und der Antriebsmotor, das wenigstens eine Antriebsrad und die Parksperreneinheit eine Außenverzahnung als Drehmomentschnittstellen aufweisen. Der Antriebsmotor, das wenigstens eine Antriebsrad und die Parksperreneinheit weisen die Außenverzahnung dafür auf dem Außenumfang eines Ausgangszahnrades, eines Antriebszahnrad und eines Festrades auf. Alle Verzahnungen weisen eine gemeinsame Achse auf, entlang derer die Schaltmuffe verlagerbar ist um wahlweise eine drehfeste Kopplung zwischen den Außenverzahnungen des Ausgangszahnrades und Antriebszahnrades oder des Antriebszahnrades und des Festrades in der Art einer Klauenkupplung herzustellen.

Das erfindungsgemäße Verfahren nach Anspruch 9 sieht vor, dass von einem ersten Wegsensor die zweite Klauenkupplung der Parksperreneinheit als betätigt registriert wird, wenn der erste Wegsensor das Schaltelement in einer zweiten Schaltposition P₂ detektiert, und dass die erste Klauenkupplung zur Kopplung des Antriebsrads mit dem Antriebsmotor als betätigt registriert wird, wenn ein zweiter Wegsensor die Schaltmuffe in einer ersten Position PS₁ registriert oder der erste Wegsensor das Schaltelement in einer ersten Schaltposition P₁ detektiert, wobei die erste Schaltposition P₁ vorzugsweise axial von einer vorläufigen ersten Position P'₁ beabstandet ist, bei der das Schaltelement im Fall einer Blockade der Kopplung zwischen dem Antriebsrad und dem Antriebsmotor zum Halten kommt.

Ausführungsformen der Erfindung, auf die diese nicht beschränkt ist, und aus denen sich weitere erfindungsgemäße Merkmale ergeben können sind in den folgenden Figuren gezeigt, wobei die Erfindung durch die Ansprüche definiert wird.

Es zeigen:
- Fig. 1: eine symbolische Darstellung eines Antriebsstrangs mit zwei Wegsensoren, welche eine erste Alternative der Erfindung darstellt,
- Fig. 2: einen Antriebsstrang nach Fig. 1 mit einer Schaltmuffe in einer Position PS₁,
- Fig. 3: einen Antriebsstrang nach Fig. 1 mit einer Schaltmuffe in einer Position PS₂,
- Fig. 4: einen Antriebsstrang nach Fig. 1 in einem nicht sicheren Fahrtzustand,
- Fig. 5: einen Antriebsstrang nach Fig. 1 in einem nicht sicheren Parkzustand,
- Fig. 6: einen Antriebsstrang nach einer zweiten Alternative der Erfindung mit nur einem Wegsensor in einem neutralen Zustand,
- Fig. 7: einen Antriebsstrang nach Fig. 6 in einem nicht sicheren Fahrtzustand,
- Fig. 8: einen Antriebsstrang nach Fig. 6 in einem sicheren Fahrtzustand,
- Fig. 9, 9a: einen Vergleich der Abstandsverhältnisse der Antriebsstränge nach Fig. 1 und Fig. 6,
- Fig. 10: einen Antriebsstrang nach Fig. 6 in einem nicht sicheren Parkzustand, und
- Fig. 11: einen Antriebsstrang nach Fig. 6 in einem sicheren Parkzustand.

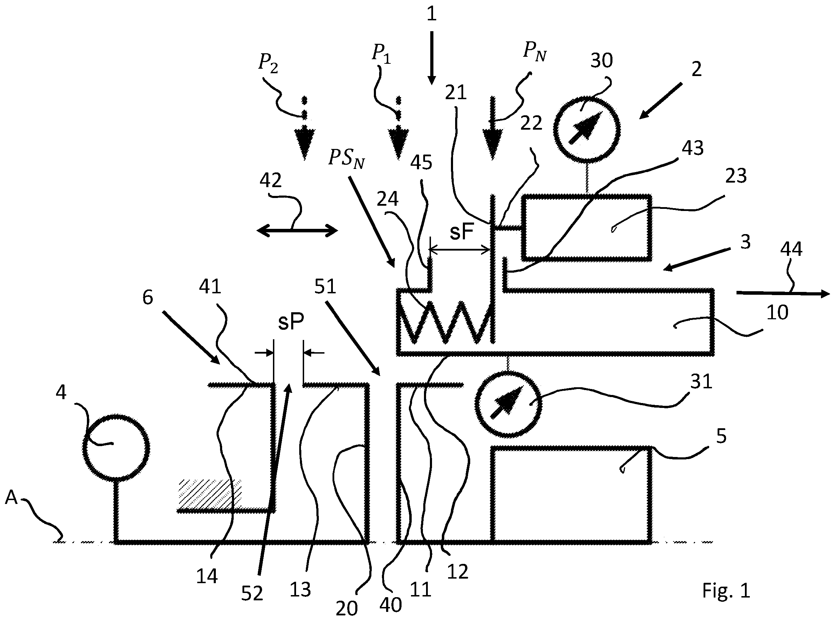

In Fig. 1 ist ein Antriebsstrang 1 dargestellt. Der Antriebsstrang 1 umfasst einen Antriebsmotor 5 zum Antreiben wenigstens eines Antriebsrads 4. Bei dem Antriebsmotor 5 handelt es sich bevorzugt um einen E-Motor. Das Drehmoment vom Antriebsmotor 5 kann dabei von einem, hier der übersichthalber nicht dargestelltem Differenzial auf unterschiedliche Antriebsräder 4 verteilt werden. Hier wird das Antriebsrad 4 beispielhaft für alle mit Drehmoment beaufschlagbare Antriebsräder dargestellt.

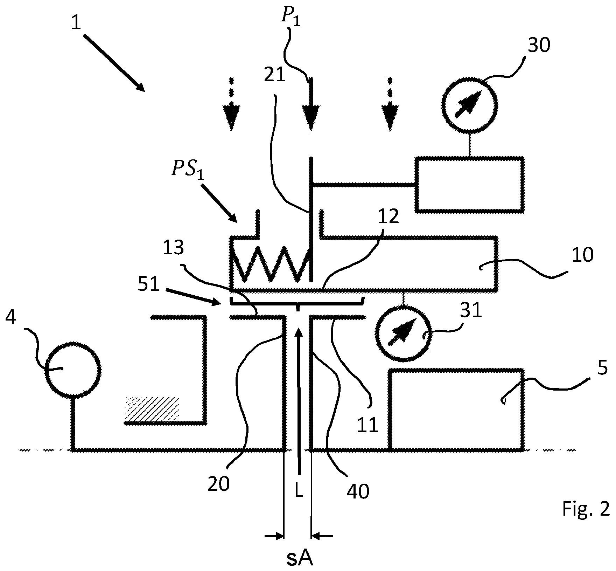

Der Antriebsmotor 5 ist über ein Ausgangszahnrad 40 mit einem Antriebszahnrad 20 koppelbar. Das Antriebszahnrad 20 stellt ein Verbindungselement des Antriebsrads 4 mit dem Antriebsmotor 5 dar. Das Ausgangszahnrad 40 und das Antriebszahnrad 20 weisen jeweils eine Außenverzahnung 11 und 13 auf. Diese Außenverzahnungen 11 und 13 stellen Drehmomentschnittstellen zum Koppeln des Antriebsmotors 5 mit dem Antriebsrad 4 dar. Das Koppeln des Antriebsmotors 5 mit dem Antriebsrad 4 erfolgt dabei in der Art einer Klauenkupplung. Hierfür ist eine Kopplungseinrichtung 3 vorgesehen, die eine axial verlagerbare Schaltmuffe 10 umfasst. Zur Herstellung der Kopplung zwischen dem Antriebsmotor 5 und dem Antriebsrad 4 kann die Schaltmuffe mittels einer Betätigungseinrichtung 2 entlang des Doppelpfeils 42 axial verschoben werden. Die Schaltmuffe 10 weist eine Innenverzahnung 12 auf, die in einer Neutralstellung PS_{N} mit der Außenverzahnung 11 des Ausgangszahnrads 40 kämmt. Zum Koppeln des Antriebsmotors 5 mit dem Antriebsrad 4 wird die Schaltmuffe 10 axial entlang der Achse A verschoben, so dass die Innenverzahnung 12 sowohl mit der Außenverzahnung 11 des Ausgangszahnrades 40, als auch mit der Außenverzahnung 13 des Antriebszahnrades 20 kämmt. Die Schaltmuffe 10 befindet sich dann in einer ersten Position PS₁, wie sie in Fig. 2 dargestellt ist. Und stellt eine drehmomentübertragende Kopplung zwischen dem Antriebsmotor 5 und dem Antriebsrad 4 in der Art einer ersten Klauenkupplung 51 her.

Zum axialen Verlagern der Schaltmuffe 10 ist diese mit einem Schaltelement 21 der Betätigungseinrichtung 2 verbunden. Bei dem Schaltelement 21 kann es sich z.B. um eine Schaltgabel handeln.

Die Verbindung zwischen der Betätigungseinrichtung 2 und der Schaltmuffe 10 ist dabei gefedert ausgeführt. In dem hier gewählten Beispiel ist dafür ein Federelement in Form einer Feder 24 zwischen der Schaltmuffe 10 und dem Schaltelement 21 vorgesehen. Bei der Feder 24 kann es sich bspw. um eine Spiralfeder, Tellerfeder o.Ä. handeln. Das Schaltelement 21 wird mittels eines Betätigungselements 22 betätigt. Hierbei kann es sich z.B. um den Kolben einer Kolben-Zylinder-Einheit handeln, es kann aber auch ein Hebelelement oder Drucktopf vorgesehen sein. In alternativen Ausgestaltungen kann die Feder 24 auch zwischen dem Betätigungselement 22 und dem Schaltelement 21 vorgesehen sein, oder es sind zwei Federelement sowohl zwischen dem Schaltelement 21 und der Schaltmuffe 10, als auch zwischen dem Betätigungselement 22 und dem Schaltelement 21 vorgesehen. Zusätzlich weist die Schaltmuffe 10 noch einen zweiten Anschlag 45 auf. Wird die Feder 24 durch das Schaltelement 21 um einen vorgegebenen Weg sF zusammengepresst, so schlägt das Schaltelement 21 an diesen zweiten Anschlag 45 an, wodurch eine weitere axiale Bewegung des Schaltelements 21 verhindert wird und die Feder 24 ausschließlich um den vorgegeben Weg sF zusammengepresst werden kann.

In Richtung des Doppelpfeils 42 kann somit durch Verlagerung des Schaltelements 21 die Schaltmuffe 10 eine erste axiale Position PS₁ einnehmen, in welcher die Schaltmuffe 10 den Antriebsmotor 5 und das Antriebsrad 4 koppelt. Dieses ist in Fig. 2 dargestellt. Hierfür weist das Antriebsrad 4 das Antriebszahnrad 20 auf, welches axial versetzt zum Ausgangszahnrad 40 angeordnet ist.

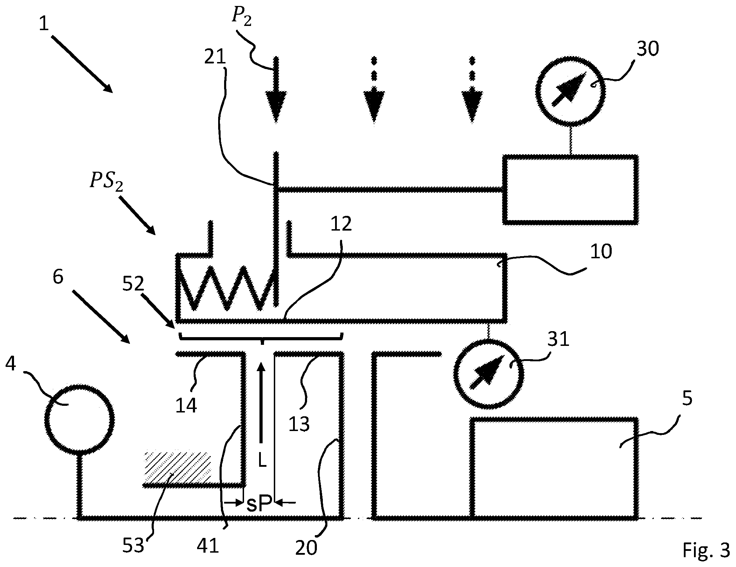

Axial versetzt zum Antriebszahnrad 20 ist im Antriebsstrang 1 ein Festrad 41 vorgesehen welches Bestandteil einer Parksperreneinheit 6 ist. Der Abstand zwischen dem Antriebszahnrad 20 und dem Festrad 41 wird mit sP bezeichnet. Wird die Schaltmuffe 10 mittels der Betätigungseinrichtung 2 weiter axial verlagert, so gerät die Innenverzahnung 12 der Schaltmuffe 10 außer Eingriff mit der Außenverzahnung 11 des Ausgangszahnrads 40, so dass keine Kopplung mehr zwischen dem Antriebsrad 4 und dem Antriebsmotor 5 vorhanden ist. Die Innenverzahnung 12 gelangt dann in Eingriff mit der Außenverzahnung 14 des Festrads 41, während sie gleichzeitig mit der Außenverzahnung 13 des Antriebszahnrads 20 in Eingriff ist. Die Schaltmuffe 10 stellt somit eine zweite Klauenkupplung 52 zur Kopplung des Antriebszahnrades 20 mit dem Festrad 41, bzw. des Antriebsrads 4 mit der Parksperreneinheit 6 dar. Das Festrad 41 ist gehäusefest angeordnet, z.B. drehfest mit einem Getriebegehäuse verbunden. Für die Kopplung zwischen Antriebsrad 4 und Parksperreneinheit 6 nimmt die Schaltmuffe 10 eine zweite axiale Position PS₂ ein, wie sie in Fig. 3 dargestellt ist.

Zur axialen Kopplung mit dem Schaltelement 21 weist die Schaltmuffe 10 einen Anschlag 43 auf, mit dem die Schaltmuffe 10 in Richtung des Pfeils 44 in der Fig.1 nach rechts verschoben werden kann. Auf diese Weise kann sequentiell die zweite Klauenkupplung 52 geöffnet, die erste Klauenkupplung 51 geschlossen und abschließend die neutrale Position P_{N} der Schaltmuffe 10 eingenommen werden.

Im eingekoppelten Zustand der beiden Klauenkupplungen 51 und 52 entsprechen den drei Positionen Neutralstellung PS_{N}, erste axiale Position PS₁ und zweite axiale Position PS₂ der Schaltmuffe 10 die drei Schaltpositionen P_{N}, P₁ und P₂ des Schaltelements 21, wie in Fig. 1 dargestellt. Die Einnahme dieser Positionen des Schaltelements 21 kann mittels eines direkt oder indirekt messenden Wegsensors 30 erkannt werden, indem beispielsweise der zurückgelegte Weg des Schaltelements 21 oder des Betätigungselements 22 gemessen wird. Es ist auch möglich bei einem rotorangetriebenen Betätigungselement 22 den Drehwinkel des Rotors als Maß für eine axiale Verlagerung des Schaltelements 21 zu nehmen. Im hier dargestellten Fall wird ein Aktorantrieb 23 zur Verlagerung des Schaltelements 21 verwendet, bei dem es sich um einen elektrischen Motor oder einen hydraulischen Antrieb handeln kann.

Während Fig. 1 eine Neutralstellung PS_{N} der Schaltmuffe 10 zeigt, ist in Fig. 2 die Schaltmuffe in einer Position PS₁ gezeigt, in der das Antriebsrad 4 mit dem Antriebsmotor 5 über die erste Klauenkupplung 51 gekoppelt ist. Das Schaltelement 21 befindet sich in der ersten Schaltposition P₁. Drehmoment kann vom Antriebsmotor 5 auf das Antriebsrad 4 über die geschlossene erste Klauenkupplung 51 übertragen werden. Der Antriebsstrang 1 befindet sich im Fahrtzustand.

Die Innenverzahnung 12 der Schaltmuffe 10 weist eine axiale Ausdehnung L auf, so dass beide Außenverzahnungen 11 und 13 des Ausgangszahnrads 40 und Antriebszahnrad 20 gleichzeitig mit der Innenverzahnung 12 in Eingriff sein können. Hierzu muss die axiale Ausdehnung L auch den axialen Abstand sA zwischen dem Ausgangszahnrad 40 und dem Antriebszahnrad 20 berücksichtigen. Die axiale Ausdehnung L entspricht im Wesentlichen der Summe der axialen Erstreckung der Außenverzahnungen 11 und 13 und des axialen Abstands sA des Ausgangsrads 40 und des Antriebsrads 20.

Fig. 3 zeigt die Schaltmuffe 10 entsprechend in der zweiten axialen Position PS₂ in welcher die zweite Klauenkupplung 52 geschlossen ist und somit das Antriebsrad 20 gehäusefest mit dem Festrad 41 gekoppelt ist. Das Antriebsrad 4 ist fest mit der Parksperreneinheit 6 verbunden und der Antriebsstrang 1 befindet sich im Parkzustand. Das Schaltelement 21 befindet sich entsprechend in der zweiten Schaltposition P₂.

Die axiale Ausdehnung L der Innenverzahnung 12 reicht aus, um die beiden Außenverzahnungen 13 und 14 von Antriebsrad 20 und Festrad 41 miteinander drehfest zu koppeln. Das Festrad 41 ist drehfest mit dem Getriebegehäuse 53 verbunden, wodurch das Antriebsrad 4 festgelegt ist und sich der Antriebsstrang im Parkzustand befindet.

In allen Figuren 1 bis 3 befindet sich die Feder 24 bis auf eine geringe Basis-Vorspannung in einem entspannten Zustand, da die endgültigen Zustände: Neutralzustand in Fig. 1, Fahrtzustand in Fig. 2 und Parkzustand in Fig. 3 sicher erreicht werden konnten.

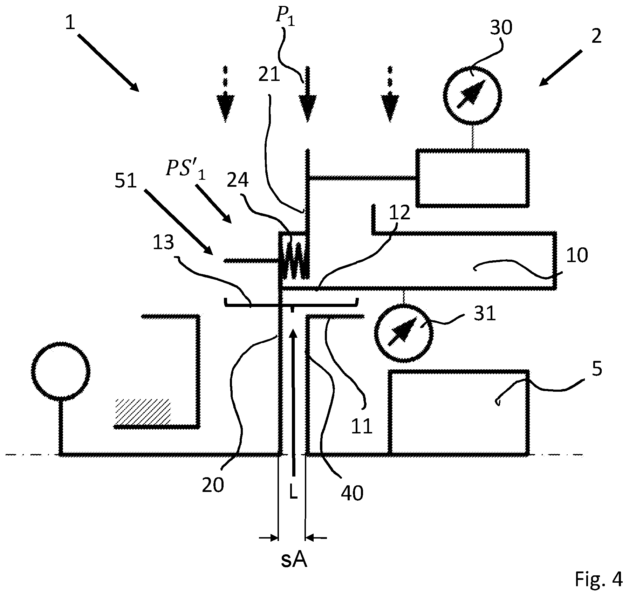

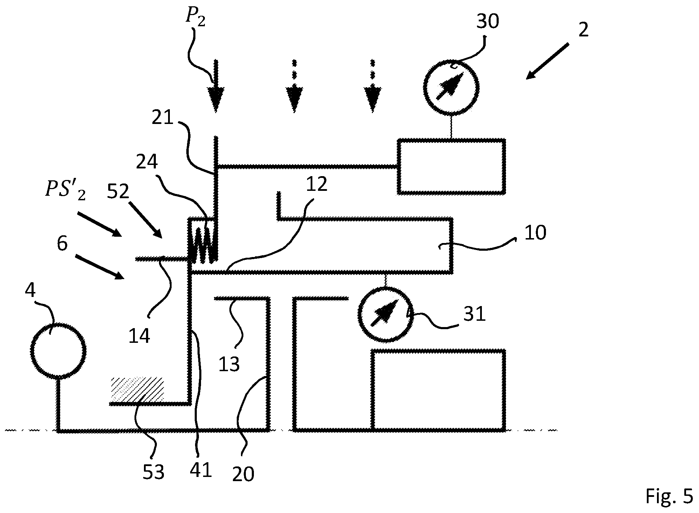

In den folgenden Figuren 4 und 5 werden jeweils nicht sicher eingelegte Zustände des Antriebsstrangs 1 dargestellt. In Fig.4 ist das der nicht sicher eingelegte Fahrtzustand und in Fig.5 der nicht sicher eingelegte Parkzustand.

Zu einem nicht sicher eingelegten Zustand kommt es durch eine Zahn-auf-Zahn-Stellung der Innenverzahnung 12 mit der jeweiligen Außenverzahnung 13 oder 14 des Antriebrads 4 oder der Parksperreneinheit 6. D.h. in diesem Zustand befindet sich das Schaltelement 21 jeweils in der entsprechenden ersten oder zweiten Schaltposition P₁ oder P₂. Durch die Zahn-auf-Zahn Stellung ist es für die Schaltmuffe 10 allerdings nicht möglich, die für den Fahrtzustand oder Parkzustand nötige axiale Position PS₁ oder PS₂ einzunehmen. Die Schaltmuffe 10 verbleibt jeweils in einer axial vorgelagerten vorläufigen ersten Position PS'₁ ohne die erste Klauenkupplung 51 zu schließen und den Fahrtzustand herstellen, wie in Fig. 4 dargestellt oder in einer vorläufigen zweiten Position PS'₂, wie sie in Fig. 5 dargestellt ist. IN der vorläufigen zweiten Position PS'₂ ist die zweite Klauenkupplung 51 noch nicht geschlossen, obwohl sich das Schaltelemente 21 bereits in der entsprechenden zweiten Schaltposition P₂ befindet.

In Fig.4 nimmt das Schaltelement 21 die für die Betätigung der ersten Klauenkupplung 51 notwendige Schaltposition P₁ ein, dieses wird so durch den ersten Wegsensor 30 detektiert. Um hier keine falsche Erkennung eines Fahrtzustandes durch eine nicht dargestellte Steuerung zuzulassen, ist in dieser ersten Alternative der Erfindung ein zweiter Wegsensor 31 im Bereich der Schaltmuffe 10 vorgesehen.

Mittels des zweiten Wegsensors 31 kann sicher ein Erreichen der ersten axialen Position PS₁ durch die Schaltmuffe 10 und damit die Kopplung von Antriebsrad 4 und Antriebsmotor 5 erkannt werden. Im Fall der Fig. 4 kann somit erkannt werden, dass zumindest die erste axiale Position PS₁ nicht eingelegt wurde. Eine fehlerhafte Ansteuerung des Antriebsmotors 5, die zu Schäden führen könnte, kann somit vermieden werden. Der zweite Wegsensor 31 kann weiter erfassen, welche genaue Position durch die Schaltmuffe 10 eingenommen wird, in diesem Fall die vorläufige erste Position PS'₁ wobei dies aber hier nicht notwendig ist. Für den zweiten Wegsensor 31 kann daher ein anderer Sensor als für den ersten Wegsensor 30 verwendet werden, der in der Lage sein muss unterschiedliche Positionen des Schaltelements 21 zu erkennen.

Wird ausgehend von Fig.4 das Fahrzeug mit dem Antriebsstrang 1 weiterbewegt, so dass sich die Stellung des Antriebszahnrades 20 und damit der Außenverzahnung 13 ändert, so wird die Innenverzahnung 12 der Schaltmuffe 10 durch die gespannte Feder 24 in die Außenverzahnung 13 hineingeschoben und die Schaltmuffe 10 axial verschoben. Nun wird diese "richtige" erste axiale Position PS₁ der Schaltmuffe 10 mittels des zweiten Wegsensors 31 erkannt und der Fahrtzustand als eingelegt ermittelt. Die Steuerung kann nun den Antriebsmotor 5, zum Drehmomentübertragen auf das Antriebsrad 4 ansteuern.

In Fig. 5 ist der noch nicht sicher eingelegte Parkzustand des Antriebsstrangs 1 gezeigt. Das Schaltelement 21 befindet sich in der zweiten Schaltposition P₂. Die Schaltmuffe 10 befindet sich in der vorläufigen zweiten Position PS'₂ und die Feder 24 ist maximal gespannt. In diesem Fall könnte zwar die vorläufige zweite Position PS'₂ durch den zweiten Wegsensor 31 erkannt werden, da aber ein nicht richtig erkannter Parkzustand des Antriebsstrangs 1 zu keinem Fehler oder keinen Schäden führt, kann der Wegsensor 31 zumindest in einer weiteren Alternative so ausgeführt sein, dass er zu Erkennung der vorläufigen zweiten Position PS'₂ nicht eingerichtet ist. In der dargestellten Zahn-auf-Zahn-Stellung reicht eine geringe Verschiebung der Innenverzahnung 12 in Umfangsrichtung aus, so dass die zweite Klauenkupplung 52 geschlossen und der Parkzustand hergestellt wird, indem die Schaltmuffe 10 über die Feder 24 von der vorläufigen zweiten Position PS'₂ in die zweite axiale Position PS₂ verlagert wird. Durch die Kopplung der Innenverzahnung 12 mit der Außenverzahnung 13 erfolgt die Verdrehung durch ein geringes Wegrollen des Antriebsrads 4.

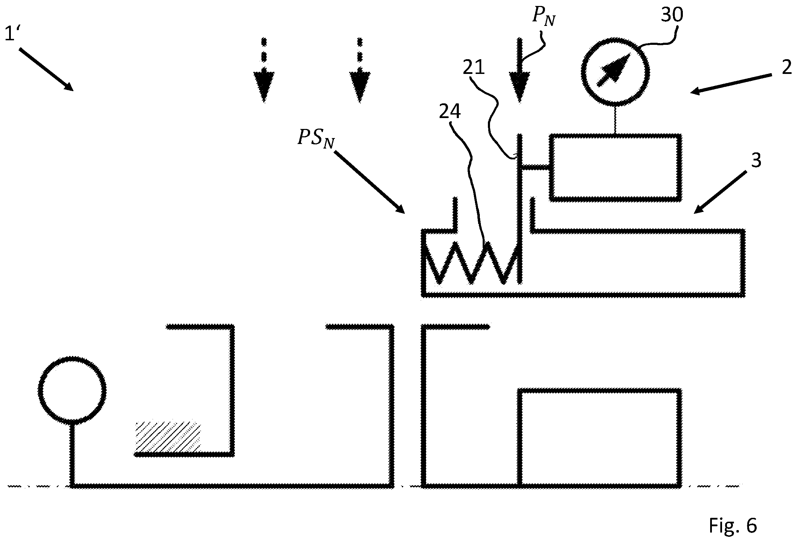

In Fig. 6 ist ein alternativer Antriebsstrang 1' dargestellt, der eine sichere Erkennung des Fahrtzustands auch ohne einen zweiten Wegsensor 31 ermöglicht. Erkennbar umfasst die Betätigungseinrichtung 2 weiterhin einen ersten Wegsensor 30 zum Erkennen der Schaltpositionen P_{N}, P₁ und P₂ des Schaltelements 21. Die Kopplungseinrichtung 3 ist dagegen wegsensorlos aufgebaut.

Um den Fahrtzustand sicher zu erkennen, wurden die axialen Abstände und Dimensionen der beteiligten Elemente so angepasst, dass nun eine sichere Erkennung des Fahrtzustandes alleine über die Erkennung von vorgegebenen Schaltpositionen P_{N}, P₁ und P₂ des Schaltelements 21 möglich ist. Gleiche Elemente werden hier und im Folgenden mit den gleichen Bezugszeichen wie in den vorigen Figuren bezeichnet.

In Fig. 6 ist der neutrale Zustand des Antriebsstrangs 1' gezeigt. Die neutrale Schaltstellung P_{N} des Schaltelements 21 kann über den ersten Wegsensor 30 alleine erkannt werden. Die neutrale Schaltstellung P_{N} entspricht immer der Neutralstellung PS_{N} der Schaltmuffe 10, so dass hierüber der neutrale Zustand sicher erkannt wird.

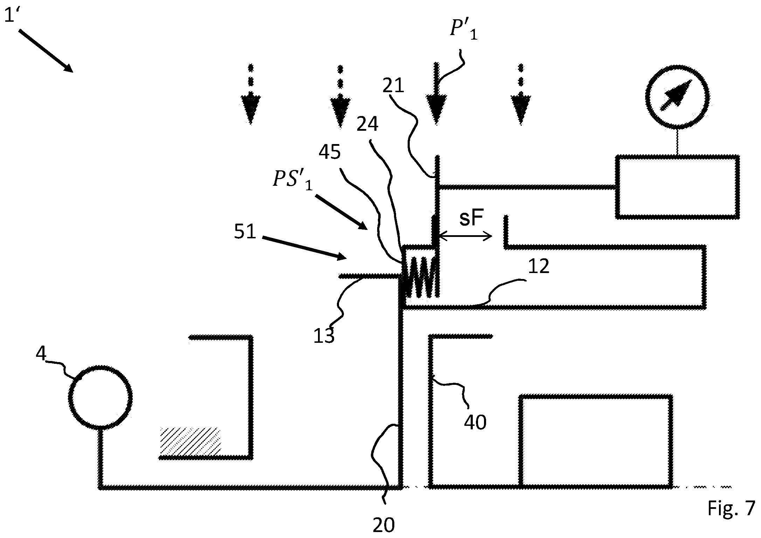

Fig. 7 zeigt einen nicht sicher eingelegten Fahrtzustand des Antriebsstrangs 1'. Das Schaltelement 21 kann bis in eine vorläufige erste Position P'₁ verlagert werden. In dem gezeigten Fall liegt eine Zahn-auf-Zahn-Stellung der Innenverzahnung 12 der Schaltmuffe 10 und der Außenverzahnung 13 des Antriebszahnrads 20 des Antriebsrads 4 vor.

Gemäß dieser Alternative wird nun diese vorläufige erste Position P'₁ gerade nicht als Fahrzustand erkannt. Die Feder 24 ist in diesem Fall vollgespannt, d.h. um den maximalen Federweg sF und das Schaltelement 21 schlägt an den zweiten Anschlag 45 an.

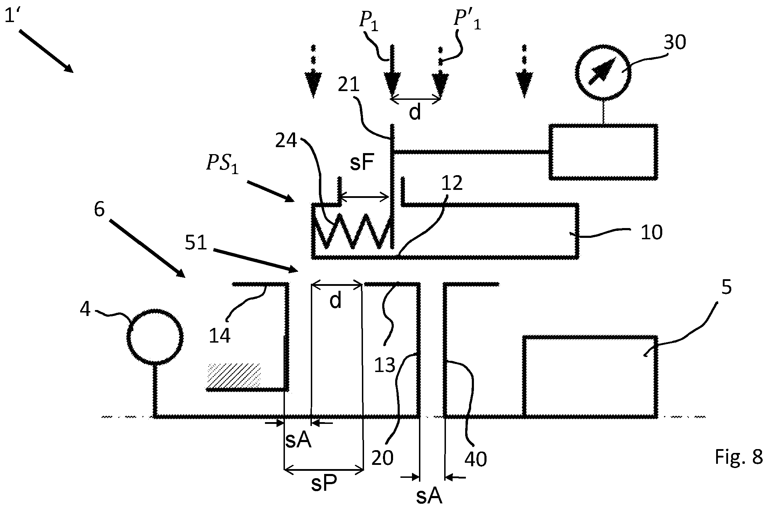

Bewegt sich das Antriebsrad 4 und damit das Antriebszahnrad 20 oder der Antriebsmotor 5 und damit das Ausgangszahnrad 40 ein wenig weiter, so kann die Zahn-auf-Zahn-Stellung überwunden und die erste Klauenkupplung 51 geschlossen werden. Dieser Zustand ist in Fig. 8 dargestellt.

In Fig.8 ist nun der sicher eingelegte Fahrtzustand des Antriebsstrangs 1' dargestellt.

Die Schaltmuffe 10 befindet sich in der ersten axialen Position PS₁, in der die erste Klauenkupplung 51 als sicher eingelegt angesehen wird. Im Unterschied zur vorläufigen ersten Position P'₁ des Schaltelements 21 musste dieses nun aber gemäß dieser alternativen Ausführungsform um eine Differenzstrecke d axial weiterverlagert werden. Dieses war aber bei der nun vorliegenden Zahn-auf-Lücke-Stellung der Innen- und Außenverzahnung 12 und 13 bei entspannter Feder 24 möglich.

Durch den ersten Wegsensor 30 kann nun diese von der vorläufigen ersten Position P'₁ verschiedene erste axiale Position P₁ des Schaltelements 21 sicher erkannt und damit auch sicher auf der Fahrtzustand des Antriebsstrangs 1 geschlossen werden.

In der ersten Alternativen Ausführungsform der Erfindung, wie sie in den Fig. 1 bis 5 beschrieben wurde, waren die axialen Abstände zwischen dem Antriebszahnrad 20 und Ausgangszahnrad sA und zwischen dem Antriebszahnrad 20 und Festrad 41 sP gleich groß. In der zweiten Alternative könnte ein zu kleiner Abstand sP zwischen dem Festrad 41 und dem Antriebsrad 20 dazu führen, dass beim Einlegen der ersten Klauenkupplung 51 nicht nur eine drehmomentübertragende Kopplung zwischen Antriebsrad 4 und Antriebsmotor 5 erfolgt, sondern auch gleichzeitig eine Kopplung mit dem Festrad 4 der Parksperreneinheit 6. Wie in Fig. 8 überragt die Schaltmuffe 10 das Antriebszahnrad 20 nun im Fahrtzustand um die Strecke d. Um eine entsprechende Kopplung mit dem Festrad 41 zu verhindern ist vorgesehen, dass der Abstand sP zwischen Antriebszahnrad 20 und Festrad 41 größer als der Abstand sA gewählt wird. Vorzugsweise um den Betrag der Differenzstrecke d.

In einer bevorzugten Ausführungsform ist vorgesehen, dass die Differenzstrecke d gerade dem maximalen Federweg sF entspricht, den die Feder 24 zwischen der entspannten Lage innerhalb der Schaltmuffe 10 wie in Fig. 8 dargestellt und der gespannten Lage, bei Anschlag des Schaltelements 21 an den zweiten Anschlag 45, wie in Fig.7 dargestellt, zusammengepresst wird.

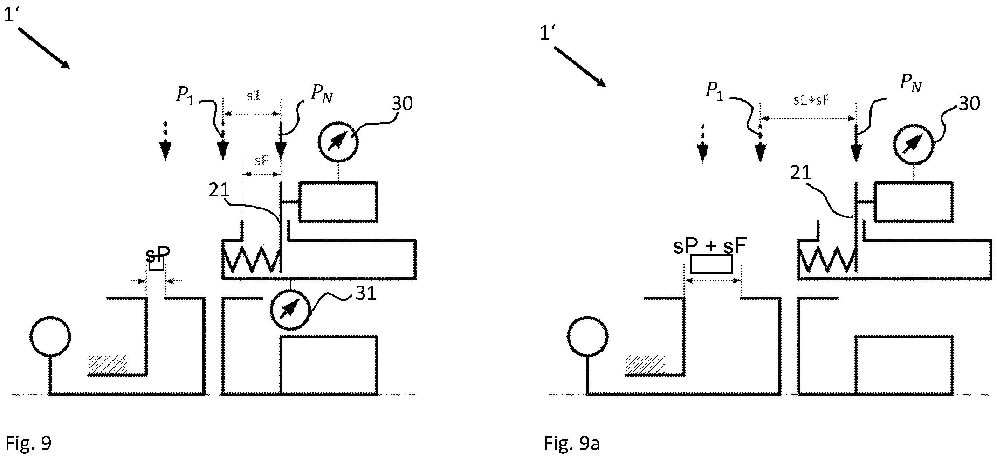

Diese Vergrößerung des Abstands sP zwischen dem Festrad 40 und dem Antriebszahnrad 20 ist in den Fig. 9 und 9a beispielhaft als Vergleich zwischen den beiden Alternativen gemäß den Fig. 1 bis 5 (siehe Fig. 9) und den Fig. 6 bis 8 (siehe Fig. 9a) dargestellt. Die erste Schaltposition P₁ des Schaltelements 21 verschiebt sich um den Betrag sF des maximalen Federwegs. D.h. von dem Abstand s₁ von der neutralen Schaltposition P_{N} zum Abstand s₁+sF von der neutralen Schaltposition P_{N}. Entsprechend wird auch der Abstand zwischen dem Festrad 40 und dem Antriebszahnrad 21 um den gleichen Betrag sF von sP zu sP+sF vergrößert.

Gemäß dieser alternativen Ausführungsform wird also ein axial breiterer Aufbau der Zahnräder 20, 40 und 41 in Kauf genommen um ohne einen zweiten Wegsensor 31 den Fahrtzustand sicher alleine mittels des ersten Wegsensors 30 zu erkennen.

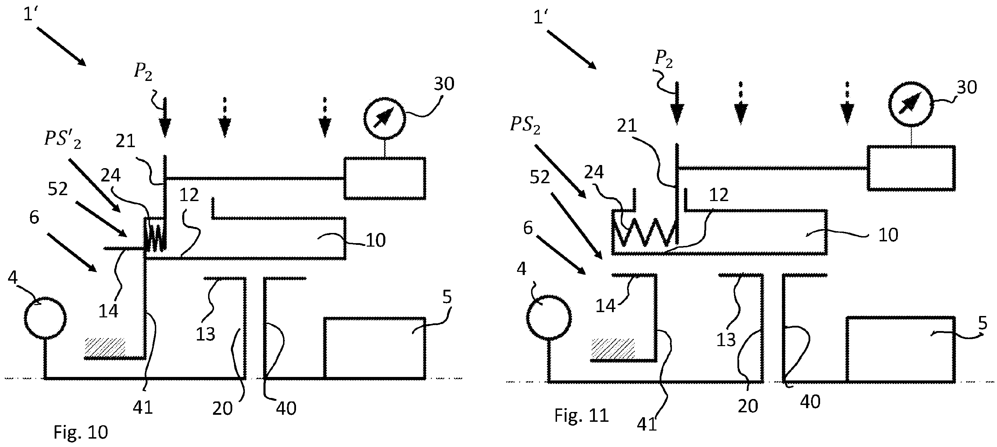

Der Vollständigkeit halber sind in den Fig. 10 und 11 noch die Zustände für eine vorläufige zweite Position PS'₂ und zweite axiale Position PS₂ der Schaltmuffe 10 gezeigt, in denen zunächst ein nicht sicherer Parkzustand (Fig. 10) resultierend aus einer Zahn-auf-Zahn-Stellung der Außenverzahnung 14 und der Innenverzahnung 12, der in einer gespannten Feder 24 resultiert und anschließend der sichere Parkzustand (Fig.11) bei dem durch geringe Verdrehung des Antriebszahnrads 21 diese Zahn-auf-Zahn-Stellung aufgehoben wurde und der Parkzustand sicher eingelegt wurde. Wie bereits zu den Fig. 3 und 5 ausgeführt, kommt es auch hier nicht darauf an, dass der Parkzustand durch den ersten Wegsensor 30 sicher erkannt ist. Eine Erkennung der zweiten Position P₂ des Schaltelements 21 unabhängig davon, ob ein sicherer oder nicht sicherer Parkzustand erreicht ist, reicht für die Steuerung des Antriebsstrang 1' vollständig aus.

Durch den größeren Abstand des Festrads 40 und Antriebszahnrad 20 und die damit sichere Erkennung des nun weiter von der neutralen Schaltposition P_{N} weg gelegenen ersten Schaltposition P₁ ist es möglich den Antriebsstrang 1' mit der Kombination eines Antriebsmotors 5 mit einem Ausgangszahnrad 40, eines Antriebsrads 4 mit einem Antriebszahnrad 20 und einem Festrad 41 einer Parksperreneinheit 6, die sequentiell über eine Schaltmuffe 10 durch nacheinander eingelegte Schaltzustände einer ersten Klauenkupplung 50 und einer zweiten Klauenkupplung 52, sicher mit nur einem einzigen Wegsensor 30 zum Erkennen der Position des Schaltelements 21, zu betreiben.

### Bezugszeichenliste

- 1: Antriebsstrang
- 2: Betätigungseinrichtung
- 3: Kopplungseinrichtung
- 4: Antriebsrad
- 5: Antriebsmotor
- 10: Schaltmuffe
- 11: Drehmomentschnittstelle, Außenverzahnung
- 12: Drehmomentschnittstelle, Innenverzahnung
- 13: Drehmomentschnittstelle, Außenverzahnung
- 14: Drehmomentschnittstelle, Außenverzahnung
- 20: Verbindungselement, Antriebszahnrad
- 21: Schaltelement
- 22: Betätigungselement
- 23: Aktorantrieb
- 24: Federelement, Feder
- 30: erster Wegsensor
- 31: zweiter Wegsensor
- 40: Ausgangszahnrad
- 41: Festrad
- 42: Doppelpfeil
- 43: erster Anschlag
- 44: Pfeil
- 45: zweiter Anschlag
- 51: erste Klauenkupplung
- 52: zweite Klauenkupplung
- 53: Getriebegehäuse

- PSN: Neutralstellung
- PS1: erste axiale Position
- PS'1: vorläufige erste Position
- PS2: zweite axiale Position
- PS'₂: vorläufige zweite Position
- PN: neutrale Schaltposition
- P1: erste Schaltposition
- P'1: vorläufige erste Position
- P2: zweite Schaltposition
- P3: dritte Schaltposition
- L: axiale Ausdehnung
- d: Differenzstrecke
- sF: maximaler Federweg
- sA: axialer Abstand
- sP: axialer Abstand
- A: Achse

## Patentansprüche

1. Antriebsstrang (1) eines Kraftfahrzeugs, umfassend eine Betätigungseinrichtung (2) zur Betätigung einer Kopplungsvorrichtung (3) zur Kopplung wenigstens eines Antriebsrades (4) mit einem Antriebsmotor (5) und zur Kopplung des wenigstens einen Antriebsrades (4) mit einer Parksperreneinheit (6), wobei die Kopplungsvorrichtung (3) eine Schaltmuffe (10) umfasst, die mittels der Betätigungseinrichtung (2) axial verlagert werden kann,
der Antriebsmotor (5) eine Drehmomentschnittstelle (11) aufweist, die in einer Neutralstellung (PS_{N}) der Schaltmuffe (10) mit einer Drehmomentschnittstelle (12) der Schaltmuffe (10) gekoppelt ist,
das wenigstens eine Antriebsrad (4) ein Verbindungselement (20) aufweist, welches eine Drehmomentschnittstelle (13) umfasst, mit welchem die Drehmomentschnittstelle (12) der Schaltmuffe (10) in einer ersten axialen Position (PS₁) gekoppelt ist, wobei die Drehmomentschnittstelle (12) der Schaltmuffe (10) eine axiale Ausdehnung (L) aufweist, so dass in der ersten axialen Position (PS₁) der Schaltmuffe (10) die Drehmomentschnittstelle (12) der Schaltmuffe (10) zur Drehmomentübertragung vom Antriebsmotor (5) zum wenigstens einem Antriebsrad (4) sowohl mit der Drehmomentschnittstelle (11) des Antriebsmotors (5), als auch mit der Drehmomentschnittstelle (13) des wenigstens einen Antriebsrads (4) gekoppelt ist,
die Parksperreneinheit (6) eine Drehmomentschnittstelle (14) aufweist , mit welcher die Drehmomentschnittstelle (12) der Schaltmuffe (10) in einer zweiten axialen Position (PS₂) der Schaltmuffe (10) gekoppelt ist,
und die axiale Ausdehnung (L) der Drehmomentschnittstelle (12) der Schaltmuffe (10) so ausgebildet ist, dass in der zweiten axialen Position (PS₂) der Schaltmuffe (10) die Drehmomentschnittstelle (12) der Schaltmuffe (10) zur Drehmomentübertragung sowohl mit der Drehmomentschnittstelle (14) der Parksperreneinheit (6), als auch mit der Drehmomentschnittstelle (13) des wenigstens einen Antriebsrads (4) gekoppelt ist, und wobei
die axiale Ausdehnung (L) weiter so ausgebildet ist, dass zu keinem Zeitpunkt sowohl eine Kopplung der Drehmomentschnittstelle (12) der Schaltmuffe (10) sowohl mit der Drehmomentschnittstelle (14) der Parksperreneinheit (6), als auch mit der Drehmomentschnittstelle (11) des Antriebsmotors (5) erfolgt.

2. Antriebsstrang (1) nach Anspruch 1, **dadurch gekennzeichnet, dass** die Betätigungseinheit (2) einen Aktorantrieb (23), ein Schaltelement (21) und ein mit dem Aktorantrieb (23) gekoppeltes Betätigungselement (22) umfasst, und
das Schaltelement (21) zum axialen Verlagern der Schaltmuffe (10) einerseits mit der Schaltmuffe (10) und andererseits mit dem Betätigungselement (22) gekoppelt ist,
wobei die Kopplung zwischen dem Schaltelement (21) und der Schaltmuffe (10) und/oder zwischen dem Schaltelement (21) und dem Betätigungselement (22) über ein Federelement (24) erfolgt.

3. Antriebsstrang (1) nach einem der Ansprüche 1 oder 2, **dadurch gekennzeichnet, dass** die Betätigungseinheit (2) einen ersten Wegsensor (30) zum Erfassen des Linearwegs des Schaltelements (21) und/oder Betätigungselements (22) in axialer Richtung umfasst.

4. Antriebsstrang (1) nach Anspruch 3, **dadurch gekennzeichnet, dass** die Kopplungseinrichtung (3) einen zweiten Wegsensor (31) zum Erfassen des Linearwegs der Schaltmuffe (10) in axialer Richtung umfasst.

5. Antriebsstrang (1) nach Anspruch 3, **dadurch gekennzeichnet, dass** ausschließlich der erste Wegsensor (30) zum Festlegen eines axialen Zustandes der Kopplungseinrichtung (3) vorgesehen ist, insbesondere zum Bestimmen, ob die Schaltmuffe (10) mit der Drehmomentschnittstelle (13) des wenigstens einen Antriebsrads (4) oder mit der Drehmomentschnittstelle (14) der Parksperreneinheit (6) gekoppelt ist, oder als mit dieser gekoppelt anzusehen ist.

6. Antriebsstrang (1) nach einem der Ansprüche 3 oder 5, **dadurch gekennzeichnet, dass** die Kopplungseinrichtung (3) wegsensorlos ausgebildet ist.

7. Antriebsstrang (1) nach Anspruch 2 und einem der Ansprüche 5 oder 6,
**dadurch gekennzeichnet, dass**
das Federelement (24) um einen maximalen Federweg sF zusammengepresst werden kann und der axiale Abstand sP zwischen der Drehmomentschnittstelle (14) der Parksperreneinheit (6) und der Drehmomentschnittstelle (13) des Antriebsrads (4) größer als ist der axiale Abstand sA zwischen der Drehmomentschnittstelle (13) des Antriebsrads (4) und der Drehmomentschnittstelle (11) des Antriebsmotors (5), vorzugsweise um den maximalen Federweg sF größer ist.

8. Antriebsstrang (1) nach einem der vorigen Ansprüche, **dadurch gekennzeichnet, dass** die Schaltmuffe (10) als Drehmomentschnittstelle eine Innenverzahnung (12) aufweist,
der Antriebsmotor (5) ein Ausgangszahnrad (40) mit einer Außenverzahnung (11),
das wenigstens eine Antriebsrad (4) ein Antriebszahnrad (20) als Verbindungelement mit einer Außenverzahnung (13), und
die Parksperreneinheit (6) ein gehäusefestes Festrad (41) mit einer Außenverzahnung (14)
als Drehmomentschnittstellen aufweisen,
wobei die Außenverzahnungen (11, 13, 14) eine gemeinsame Achse A aufweisen,
auch die Innenverzahnung (12) der Schaltmuffe (10) die gemeinsame Achse A aufweist, so dass die Innenverzahnung (12) durch axiales Verlagern entlang der Achse A mit der Außenverzahnung (11) oder gleichzeitig mit den Außenverzahnungen (11 und 13) oder (13 und 14) in der Art einer Klauenkupplung (50, 51, 52) kämmt.

9. Verfahren zum sequentiellen Betätigen einer ersten Klauenkupplung (51) und einer zweiten Klauenkupplung (52) zum drehfesten Koppeln wenigstens eines Antriebsrads (4) wahlweise mit einer Parksperreneinheit (6) oder einem Antriebsmotor (5) in einem Antriebsstrang (1) nach einer Kombination der Ansprüche 1 bis 4 und 8, **dadurch gekennzeichnet, dass** von dem ersten Wegsensor (30) die zweite Klauenkupplung (52) der Parksperreneinheit (6) als betätigt registriert wird, wenn der erste Wegsensor (30) das Schaltelement (21) in einer zweiten Schaltposition P₂ detektiert, und dass die erste Klauenkupplung (51) zur Kopplung des Antriebsrads (4) mit dem Antriebsmotor (5) als betätigt registriert wird, wenn der zweite Wegsensor (31) die Schaltmuffe (10) in einer ersten Position PS₁ registriert oder der erste Wegsensor (30) das Schaltelement (21) in einer dritten Schaltposition P₃ detektiert.

## Claims

1. A drive train (1) of a motor vehicle, comprising an actuation device (2) for actuation of a coupling device (3) for coupling at least one drive wheel (4) to a drive motor (5) and for coupling the at least one drive wheel (4) to a parking lock unit (6), wherein the coupling device (3) comprises a sliding clutch (10) which can be displaced axially by means of the actuation device (2), the drive motor (5) has a torque interface (11) which, in a neutral position (PS_{N}) of the sliding clutch (10), is coupled to a torque interface (12) of the sliding clutch (10), the at least one drive wheel (4) has a connecting element (20) which comprises a torque interface (13) to which the torque interface (12) of the sliding clutch (10) is coupled in a first axial position (PS₁), wherein the torque interface (12) of the sliding clutch (10) has an axial extension (L) so that, in the first axial position (PS₁) of the sliding clutch (10), the torque interface (12) of the sliding clutch (10) is coupled for torque transmission from the drive motor (5) to the at least one drive wheel (4) both to the torque interface (11) of the drive motor (5) as well as the torque interface (13) of the at least one drive wheel (4), the parking lock unit (6) has a torque interface (14) with which the torque interface (12) of the sliding clutch (10) is coupled in a second axial position (PS₂) of the sliding clutch (10), and the axial extension (L) of the torque interface (12) of the sliding clutch is designed such that, in the second axial position (PS₂) of the sliding clutch (10), the torque interface (12) of the sliding clutch (10) is coupled for torque transmission both to the torque interface (14) of the parking lock unit (6) as well as the torque interface (13) of the at least one drive wheel (4), and wherein the axial extension (L) is further designed such that at no point in time is there a coupling of the torque interface (12) of the sliding clutch (10) both to the torque interface (14) of the parking lock unit (6) and the torque interface (11) of the drive motor (5).

2. The drive train (1) according to claim 1, **characterized in that** the actuation device (2) comprises an actuator drive (23), a shift element (21) and an actuation element (22) coupled to the actuator drive (23) and the shift element (21) is coupled on the one hand to the sliding clutch (10) and on the other hand to the actuation element (22) for displacing the sliding clutch (10) axially, wherein the coupling between the shift element (21) and the sliding clutch (10) and/or between the shift element (21) and the actuation element (22) is effected via a spring element (24).

3. The drive train (1) according to any one of claims 1 or 2, **characterized in that** the actuation device (2) comprises a first displacement sensor (30) for capturing the linear travel of the shift element (21) and/or actuation element (22) in the axial direction.

4. The drive train (1) according to claim 3, **characterized in that** the coupling device (3) comprises a second displacement sensor (31) for capturing the linear travel of the sliding clutch (10) in the axial direction.

5. The drive train (1) according to claim 3, **characterized in that** only the first displacement sensor (30) is provided for determining an axial state of the coupling device (3), in particular for determining whether the sliding clutch (10) is coupled to the torque interface (13) of the at least one drive wheel (4) or to the torque interface (14) of the parking lock unit (6), or is to be regarded as coupled thereto.

6. The drive train (1) according to any one of claims 3 or 5, **characterized in that** the coupling device (3) is designed without displacement sensors.

7. The drive train (1) according to claim 2 and any one of claims 5 or 6, **characterized in that** the spring element (24) can be compressed by a maximum spring travel sF and the axial distance sP between the torque interface (14) of the parking lock unit (6) and the torque interface (13) of the drive wheel (4) is greater than the axial distance sA between the torque interface (13) of the drive wheel (4) and the torque interface (11) of the drive motor (5), preferably greater by the maximum spring travel sF.

8. The drive train (1) according to any one of the preceding claims, **characterized in that** the sliding clutch (10) has an inner toothing (12) as a torque interface, the drive motor (5) has an output gear (40) with an outer toothing (11), the at least one drive wheel (4) has a drive gear (20) as a connecting element with an outer toothing (13), and the parking lock unit (6) has a fixed gear (41) secured to the housing with an outer toothing (14) as torque interfaces, wherein the outer toothings (11, 13, 14) have a common axis A, the inner toothing (12) of the sliding clutch (10) also has the common axis A so that the inner toothing (12) meshes with the outer toothing (11) or simultaneously with the outer toothings (11 and 13) or (13 and 14) in the manner of a claw clutch (50, 51, 52) by means of axial displacement along the axis A.

9. A method for sequentially actuating a first claw clutch (51) and a second claw clutch (52) for coupling at least one drive wheel (4) in a rotationally fixed manner selectively with a parking lock unit (6) or a drive motor (5) in a drive train (1) according to a combination of claims 1 to 4 and 8, **characterized in that** the second claw clutch (52) of the parking lock unit (6) is registered as actuated by the first displacement sensor (30), when the first displacement sensor (30) detects the shift element (21) in a second shift position P₂, and **in that** the first claw clutch (51) for coupling the drive wheel (4) to the drive motor (5) is registered as actuated when the second displacement sensor (31) registers the sliding clutch (10) in a first position PS₁ or the first displacement sensor (30) detects the shift element (21) in a third shift position P₃.

## Revendications

1. Chaîne cinématique (1) d'un véhicule automobile, comprenant un dispositif d'actionnement (2) pour actionner un dispositif d'accouplement (3) pour accoupler au moins une roue motrice (4) à un moteur d'entraînement (5) et pour accoupler l'au moins une roue motrice (4) à une unité de verrou de stationnement (6), dans laquelle le dispositif d'accouplement (3) comprend un manchon de changement de vitesse (10) qui peut être déplacé axialement par le biais du dispositif d'actionnement (2), le moteur d'entraînement (5) présente une interface de couple (11) qui, dans une position neutre (PS_{N}) du manchon de changement de vitesse (10), est accouplée à une interface de couple (12) du manchon de changement de vitesse (10), dans laquelle l'au moins une roue motrice (4) présente un élément de liaison (20) qui comprend une interface de couple (13) avec laquelle l'interface de couple (12) du manchon de changement de vitesse (10) peut être accouplée dans une première position axiale (PS₁), dans laquelle l'interface de couple (12) du manchon de changement de vitesse (10) présente une extension axiale (L) telle que, dans la première position axiale (PS₁) du manchon de changement de vitesse (10), l'interface de couple (12) du manchon de changement de vitesse (10), pour transmettre le couple du moteur d'entraînement (5) à l'au moins une roue motrice (4), est accouplée à la fois à l'interface de couple (11) du moteur d'entraînement (5) et également à l'interface de couple (13) de l'au moins une roue motrice (4), l'unité de verrou de stationnement (6) présente une interface de couple (14) avec laquelle l'interface de couple (12) du manchon de changement de vitesse (10) est accouplée dans une seconde position axiale (PS₂) du manchon de changement de vitesse (10), et l'extension axiale (L) de l'interface de couple (12) du manchon de changement de vitesse est conçue de telle sorte que dans la seconde position axiale (PS₂) du manchon de changement de vitesse (10), l'interface de couple (12) du manchon de changement de vitesse (10) est accouplée à la fois à l'interface de couple (14) de l'unité de verrou de stationnement (6) et à l'interface de couple (13) de l'au moins une roue motrice (4) pour la transmission de couple, et dans laquelle l'extension axiale (L) est en outre conçue de telle sorte qu'à aucun moment il n'y a d'accouplement de l'interface de couple (12) du manchon de changement de vitesse (10) à la fois à l'interface de couple (14) de l'unité de verrou de stationnement (6) et à l'interface de couple (11) du moteur d'entraînement (5).

2. Chaîne cinématique (1) selon la revendication 1, **caractérisée en ce que** l'unité d'actionnement (2) comprend un entraînement d'actionneur (23), un élément de changement de vitesse (21) et un élément d'actionnement (22) accouplé à l'entraînement d'actionneur (23), et l'élément de changement de vitesse (21) est accouplé, d'une part, au manchon de changement de vitesse (10) et, d'autre part, à l'élément d'actionnement (22) pour déplacer axialement le manchon de changement de vitesse (10), dans laquelle l'accouplement entre l'élément de changement de vitesse (21) et le manchon de changement de vitesse (10) et/ou entre l'élément de changement de vitesse (21) et l'élément d'actionnement (22) s'effectue par l'intermédiaire d'un élément ressort (24).

3. Chaîne cinématique (1) selon l'une des revendications 1 ou 2, **caractérisée en ce que** l'unité d'actionnement (2) comprend un premier capteur de course (30) pour détecter la course linéaire de l'élément de changement de vitesse (21) et/ou de l'élément d'actionnement (22) dans la direction axiale.

4. Chaîne cinématique (1) selon la revendication 3, **caractérisée en ce que** le dispositif d'accouplement (3) comprend un second capteur de course (31) pour détecter la course linéaire du manchon de changement de vitesse (10) dans la direction axiale.

5. Chaîne cinématique (1) selon la revendication 3, **caractérisée en ce que** seul le premier capteur de course (30) est prévu pour établir un état axial du dispositif d'accouplement (3), en particulier pour déterminer si le manchon de changement de vitesse (10) est accouplé à l'interface de couple (13) de l'au moins une roue motrice (4) ou à l'interface de couple (14) de l'unité de verrou de stationnement (6), ou doit être considéré comme accouplé à celles-ci.

6. Chaîne cinématique (1) selon l'une des revendications 3 ou 5, **caractérisée en ce que** le dispositif d'accouplement (3) est conçu sans capteur de course.

7. Chaîne cinématique (1) selon la revendication 2 et l'une des revendications 5 ou 6, **caractérisée en ce que** l'élément ressort (24) peut être comprimé d'une course de ressort maximale sF et la distance axiale sP entre l'interface de couple (14) de l'unité de verrou de stationnement (6) et l'interface de couple (13) de la roue motrice (4) est supérieure à la distance axiale sA entre l'interface de couple (13) de la roue motrice (4) et l'interface de couple (11) du moteur d'entraînement (5), de préférence de la course de ressort maximale sF.

8. Chaîne cinématique (1) selon l'une quelconque des revendications précédentes, **caractérisée en ce que** le manchon de changement de vitesse (10) présente une denture intérieure (12) comme interface de couple, le moteur d'entraînement (5) présente une roue dentée de sortie (40) comportant une denture extérieure (11), l'au moins une roue motrice (4) présente une roue dentée d'entraînement (20) comportant une denture extérieure (13) comme élément de liaison, et l'unité de verrou de stationnement (6) présente une roue fixe (41) fixée au carter comportant une denture extérieure (14) comme interface de couple, dans laquelle les dentures extérieures (11, 13, 14) présentent un axe commun A, et la denture intérieure (12) du manchon de changement de vitesse (10) présente également l'axe commun A, de telle sorte que la denture intérieure (12) peut s'engrener par déplacement axial le long de l'axe A avec la denture extérieure (11) ou simultanément avec les dentures extérieures (11 et 13) ou (13 et 14) à la manière d'un embrayage à griffes (50, 51, 52).

9. Procédé d'actionnement séquentiel d'un premier embrayage à griffes (51) et d'un second embrayage à griffes (52) pour l'accouplement solidaire en rotation d'au moins une roue motrice (4), éventuellement avec une unité de verrou de stationnement (6) ou un moteur d'entraînement (5) dans une chaîne cinématique (1), selon une combinaison des revendications 1 à 4 et 8, **caractérisé en ce que** le second embrayage à griffes (52) de l'unité de verrou de stationnement (6) est enregistré comme actionné par le premier capteur de course (30) lorsque le premier capteur de course (30) détecte l'élément de changement de vitesse (21) dans une deuxième position de commutation P₂, et que le premier embrayage à griffes (51) pour accoupler la roue motrice (4) au moteur d'entraînement (5) est enregistré comme actionné lorsque le second capteur de course (31) enregistre le manchon de changement de vitesse (10) dans une première position PS₁ ou le premier capteur de course (30) détecte l'élément de changement de vitesse (21) dans une troisième position de commutation P₃.
